# FASCICULE DE BREVET EUROPEEN

(11) **EP 1 326 806 B1**
(45) Date de publication et mention de la délivrance du brevet: **25.05.2005**
(21) Numéro de dépôt: 01972202.4
(22) Date de dépôt: 25.09.2001
(51) Int. Cl.: C02F 3/30

(54) **ERFAHREN ZUR ABWASSERREINIGUNG**
ABWASSERREINIGUNGSVERFAHREN ZUR BESEITIGUNG VON STICKSTOFF-UND-PHOSPHATHALTIGER VERSCHMUTZUNG
METHOD FOR EFFLUENT PURIFICATION

(30) Priorité: 27.09.2000 FR 0012303
(43) Date de publication de la demande: 16.07.2003
(73) Titulaire: ONDEO DEGREMONT, 92500 Rueil-Malmaison (FR)
(72) Inventeur: WOUTERS-WASIAK, Katia, F-67220 THANVILLE (FR); HUBER, Olivier, F-67380 LINGOLSHEIM (FR); DUPONT, Frédéric, F-67380 LINGOLSHEIM (FR); DEMAIN, Daniel, F-67460 SOUFFELWEYERSHEIM (FR)
(74) Mandataire: Peaucelle, Chantal
(86) Numéro de dépôt international: PCT/FR2001/002968
(87) Numéro de publication internationale: WO 2002/026641

(56) Documents cités:
- EP-A- 0 396 142
- DE-A- 2 826 922
- DE-A- 4 436 739
- FR-A- 2 753 191
- FR-A- 2 760 232
- US-A- 5 304 308
- US-A- 5 447 633
- US-A- 5 798 044

## Description

La présente invention concerne un procédé d'épuration d'eaux résiduaires, ce procédé étant du type « biologique par boues activées » et ayant pour objectif l'élimination simultanée de la pollution azotée et de la pollution phosphorée quelles que soient les variations de charges polluantes journalières à traiter, ces variations pouvant être périodiques.

On sait que dans les stations de traitement d'eaux résiduaires les variations de charges polluantes peuvent provenir notamment :
- d'une activité polluante spécifique et cyclique raccordée au réseau d'assainissement (par exemple industrie viticole) ;
- d'évènements pluvieux conjugués avec une configuration de réseau d'assainissement favorisant la décantation des matières en suspension dans les canalisations, en période de temps sec (basse charge) dans ce cas, l'augmentation des débits d'eaux résiduaires transportées en période de pluie (haute charge) provoque un curage des canalisations se traduisant par une augmentation temporaire (de l'ordre de 24 à 48 heures) de la charge polluante qui est reçue par la station de traitement ;
- des saisons (été - hiver).

On résumera ci-après l'état actuel de la technique concernant le traitement de la pollution azotée ainsi que le traitement de la pollution phosphorée par des stations d'épuration biologique du type boues activées. On pourra également se reporter au Mémento Technique de l'Eau, 9^{ème} Edition,1989, Tome 2, chapitre 24, édité par DEGREMONT.

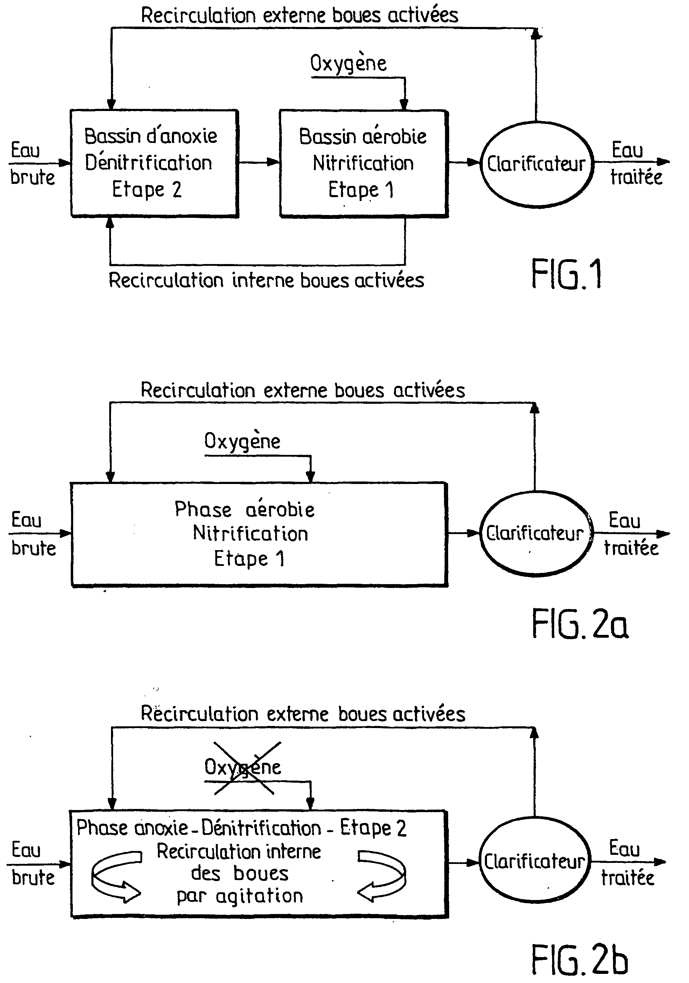

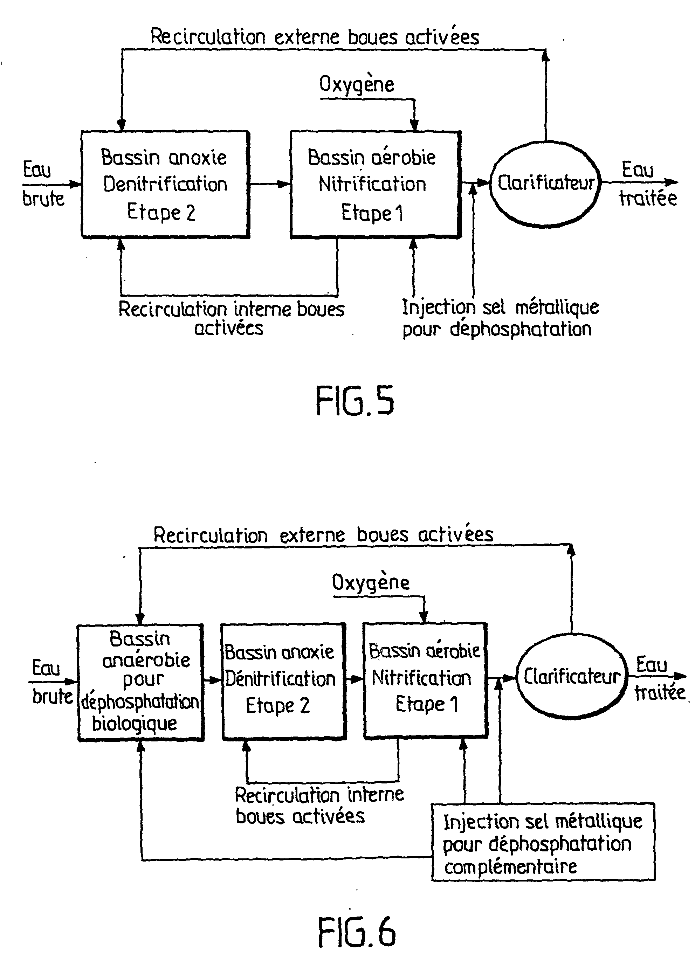

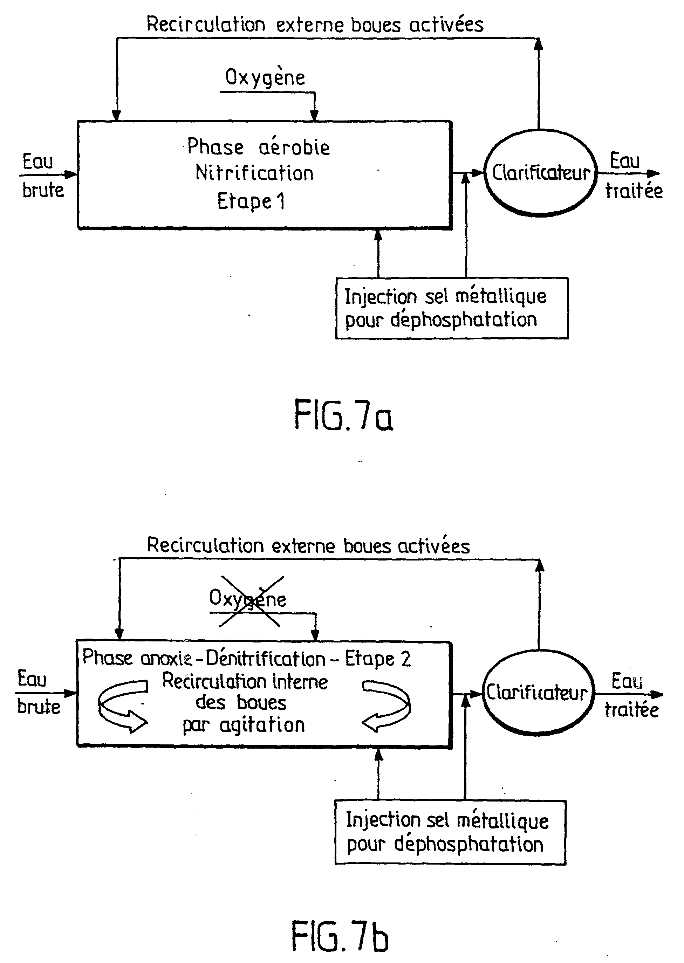

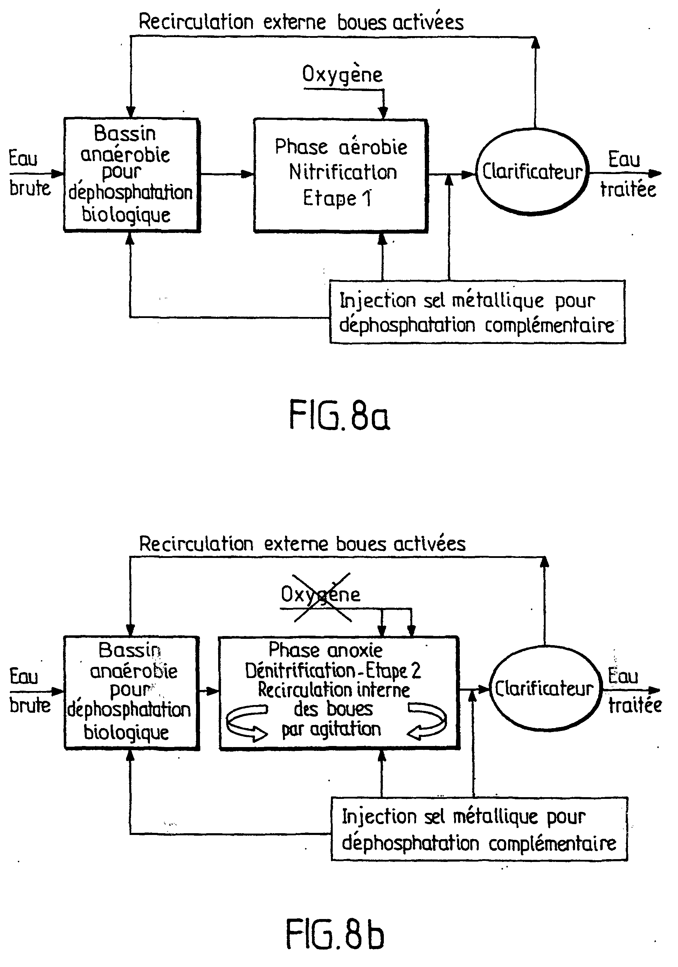

Dans cette description, on se réfèrera aux figures 1 à 8b qui représentent de façon schématique des modes de mise en oeuvre des procédés selon cet état actuel de la technique.

### 1°) TRAITEMENT DE L'AZOTE

On sait que dans son principe général le traitement de l'azote par voie biologique comporte deux étapes :
- la première étape, conduite dans une zone dite aérobie, constitue l'étape de nitrification au cours de laquelle on oxyde sous forme de nitrates les formes réduites de l'azote (organique et minéral) par l'intermédiaires de bactéries autotrophes. Au cours de cette étape, les bactéries mises en oeuvre doivent disposer d'une part d'une source de carbone minéral normalement présente dans l'effluent à traiter sous la forme de carbonates et d'autre part d'une source d'oxygène apportée par des moyens d'aération mécanique ;
- la seconde étape conduite dans une zone dite d'anoxie constitue l'étape de dénitrification au cours de laquelle on réduit les nitrates formés lors de la première étape, en azote gazeux qui est libéré dans l'atmosphère. Cette étape met en oeuvre des bactéries hétérotrophes qui doivent disposer d'une part d'une source de carbone organique naturellement présente dans l'effluent à traiter et d'autre part d'une source d'oxygène qui est constituée par l'oxygène chimiquement lié à l'azote des nitrates, ce qui permet de réduire ceux-ci en azote gazeux.

A l'heure actuelle, il existe deux techniques permettant de mettre en oeuvre le procédé mentionné ci-dessus. Ces deux techniques diffèrent uniquement en ce qui concerne la seconde étape, c'est-à-dire la mise en oeuvre de la zone d'anoxie. La première de ces techniques met en oeuvre deux bassins de traitement (figure 1) et la seconde met en oeuvre un bassin unique (figure 2a et 2b).

### a) Technique en deux bassins

Ainsi qu'on le voit sur la figure 1, chaque étape du traitement mentionné ci-dessus, s'effectue dans un bassin séparé :
- un bassin aérobie dans lequel s'effectue la première étape (nitrification) ;
- un bassin d'anoxie dans lequel est mise en oeuvre la seconde étape (dénitrification) ;

Sur la figure 1, on voit clairement la manière selon laquelle s'effectue ce traitement connu.

L'eau brute, c'est-à-dire l'effluent à traiter, apporte le carbone nécessaire aux bactéries hétérotrophes qui assurent la dénitrification dans le bassin d'anoxie, la masse de bactéries nécessaires, contenues dans les boues activées, est apportée en permanence grâce à une recirculation interne des boues activées du bassin aérobie vers le bassin d'anoxie.

L'oxygène nécessaire à l'aération dans le bassin aérobie est apporté par tout moyen d'aération mécanique (turbine, brosses, surpresseur etc...). La capacité des moyens d'aération (QO₂) se caractérise par leur puissance horaire exprimée en kilogramme d'oxygène par heure (kgO₂/h). Cette puissance horaire est calculée selon le principe suivant :
QO₂ = quantité d'oxygène journalière/temps de fonctionnement journalier.

La quantité d'oxygène journalière est la quantité nécessaire au traitement de toute la pollution, carbonée et azotée, le temps de fonctionnement journalier des moyens d'aération étant d'une manière générale de l'ordre de 20 h par jour. Avec cette technique de traitement, la puissance horaire d'aération est de l'ordre de 1/20 de la quantité d'oxygène journalière à apporter.

### b) Technique en un bassin

Dans cette technique connue, illustrée par les figures 2a et 2b, les deux étapes de nitrification et de dénitrification se déroulent dans un bassin unique avec alternance des phases aérobie et d'anoxie. Ainsi, le même bassin biologique joue alternativement le rôle de bassin aérobie et de bassin d'anoxie afin d'assurer la totalité du processus de traitement de l'azote.

La figure 2a représente le mode de fonctionnement du bassin unique en phase aérobie (première étape - nitrification) et la figure 2b représente le mode de fonctionnement de ce bassin en phase d'anoxie (deuxième étape - dénitrification).

L'eau brute, c'est-à-dire l'effluent à traiter, apporte le carbone nécessaire aux bactéries hétérotrophes qui assure la dénitrification en phase d'anoxie (deuxième étape).

L'oxygène nécessaire à l'aération lors du fonctionnement en phase aérobie, est apporté par tout moyen d'aération mécanique comme dans le cas de la figure 1. La puissance des moyens d'aération (QO₂) est déterminée de la même manière qu'indiqué ci-dessus dans le cas du traitement en deux bassins.

Le temps de fonctionnement journalier des moyens d'aération intègre la durée nécessaire aux phases d'anoxie (pas d'aération), celle-ci étant directement proportionnelle à la quantité d'azote à traiter. Par conséquent, la durée de l'aération sur un cycle de 24 heures est beaucoup plus réduite dans le cas de cette technique en un bassin unique par rapport à la technique à deux bassins, pour une même charge polluante à traiter. D'une façon générale, cette durée d'aération est de l'ordre de 12 heures par jour.

Dans cette technique, la puissance horaire d'aération est de l'ordre de 1/12 de la quantité d'oxygène journalière à apporter.

On a résumé ci-après une comparaison des coûts des deux techniques de traitement de l'azote rappelées ci-dessus.

Dans ces deux techniques, le volume total de bassin d'aération biologique (volume cumulé des deux bassins aérobie et d'anoxie dans la première technique ou volume total du bassin en fonctionnement alterné selon la seconde technique) sera le même pour une charge de pollution à traiter identique. Les différences essentielles entre les deux techniques sont les suivantes :
- Les dispositions constructives de l'étage biologique dont la configuration en deux bassins sont plus onéreuses que la configuration en un bassin unique ;
- la puissance des moyens d'aération qui est supérieure dans la technique à bassin unique, d'environ 70% par rapport à celle nécessaire dans la technique à deux bassins.

Les deux techniques de traitement présentant une efficacité reconnue équivalente, dans la mesure où les règles de l'art sont respectées, le choix de l'une ou l'autre de ces techniques répond le plus souvent à des considérations d'ordre économique. En effet, il est communément admis que pour des petites stations d'épuration, la technique en un seul bassin nécessite un investissement plus faible que la technique en deux bassins. Cet avantage diminue avec l'augmentation de la capacité de traitement, pour s'inverser totalement dans la gamme des grosses unités de traitement, le coût des systèmes d'aération devenant alors prédominant par rapport aux sujétions imposées par la configuration en deux bassins.

### 2°) TRAITEMENT DU PHOSPHORE

Dans l'état actuel de la technique, le traitement du phosphore s'effectue selon deux voies, respectivement physico-chimique et biologique.

### a) Traitement par voie physico-chimique

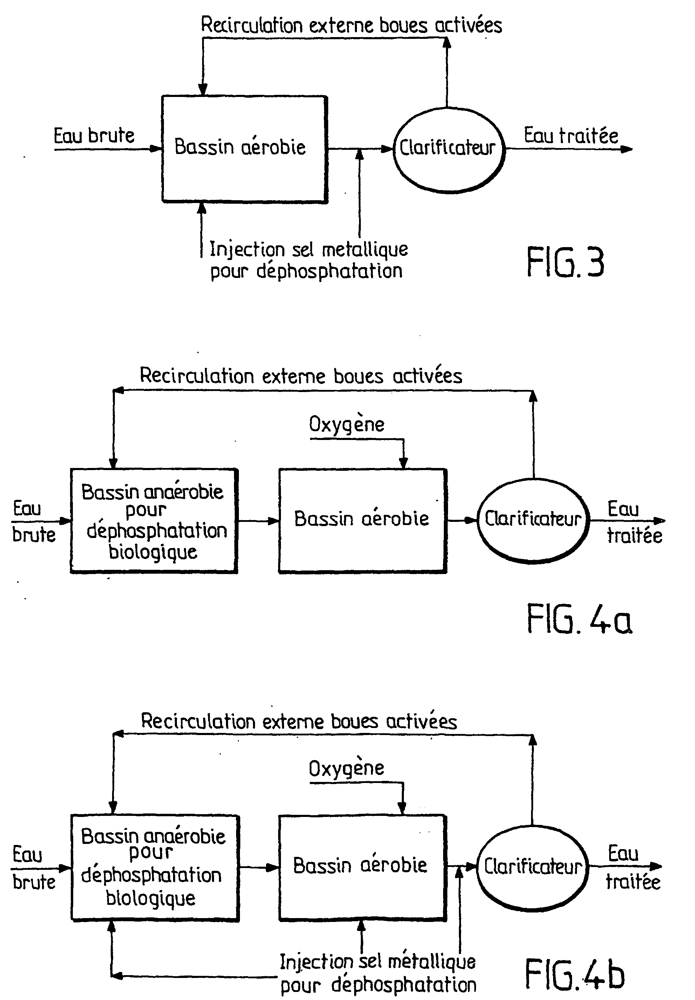

La mise en oeuvre de ce traitement est illustrée par la figure 3. Il consiste à injecter un sel métallique (par exemple FeCl₃) en quantité adaptée au niveau de traitement requis afin de précipiter le phosphore à éliminer sous la forme d'un phosphate métallique. Ainsi qu'on le voit sur la figure 3, le réactif peut être injecté en plusieurs endroits du système biologique : dans le bassin aérobie ou entre le bassin aérobie et le clarificateur. Dans les deux cas, le phosphate métallique précipité est extrait de la filière de traitement avec les boues biologiques en excès.

Les boues de déphosphatation sont constituées d'un mélange de phosphate métallique et d'hydroxyde métallique, l'ion métallique étant obligatoirement injecté à des doses supérieures à la stoechrométrie, du fait de la compétition des différentes réactions chimiques mises en jeu. L'ordre de grandeur du rapport molaire : ion métallique/P éliminé (par exemple Fe/P) se situe entre 1,1 et 1,8 suivant le rendement d'élimination recherché pour le phosphore.

La quantité de sel métallique à injecter est proportionnelle à la quantité de phosphore à précipiter, laquelle est définie de la manière suivante :
P(pré) = P(ent) - P(assim) - P(rejet)
Avec :
P(pré) : quantité de phosphore à précipiter,
P(ent) : quantité de phosphore à l'entrée du système de traitement,
P(assim) : quantité de phosphore assimile biologiquement pour le métabolisme des micro-organismes,
P(rejet) : quantité de phosphore rejeté par le système de traitement, définie par la qualité de rejet à respecter.

D'une façon générale, le rendement d'élimination correspondant au P(assim) est de l'ordre de 25%.

A titre d'exemple, la quantité P(pré) nécessaire pour respecter le niveau « PT1 » qui correspond à un rendement d'élimination de 80% serait, pour une quantité P(ent)= 100 kg/j :
P(pré) = 100 - 25 - 20 = 55 kg/j.

La production de boues de déphosphatation correspondante serait de 325 kg/j, dans le cas de l'utilisation d'un sel de fer avec un rapport molaire Fe/P de 1,3 ; la quantité de sel de fer utilisée serait de 129 kg exprimée en fer.

### b) Traitement par voie biologique

Dans cette technique, illustrée par la figure 4a, on effectue une sur-assimilation du phosphore par les micro-organismes (bactéries) afin que la quantité P(assim) soit nettement plus élevée que dans un système de traitement biologique classique. Sans qu'il soit nécessaire d'expliquer dans le détail les mécanismes biologiques mis en oeuvre dans ce traitement, on peut dire que le résultat est obtenu en faisant subir en permanence aux bactéries des phases successives d'anaérobiose et d'aérobiose.

Comme on le voit sur les figures 4a et 4b, l'installation de traitement comporte dans ce cas un bassin anaérobie pour la déphosphatation biologique et un bassin aérobie. Le principe de fonctionnement ressort clairement de l'examen de ces figures.

Les principales conditions nécessaires à la réalisation du processus de sur-assimilation du phosphore sont les suivantes :
- pour l'effluent à traiter :
   - rapport DCO/P élevé
   - présence de DCO soluble facilement assimilable.
- pour le bassin anaérobie :
   - absence d'oxygène dissous et d'oxygène lié permettant l'existence d'un potentiel redox négatif correspondant à des conditions anaérobies vraies ;
   - temps de séjour de l'effluent compris entre 2 et 3 heures.

Lorsque les conditions mentionnées ci-dessus sont respectées, d'une façon générale, le rendement d'élimination correspondant à la quantité P(assim) est de l'ordre de 55%. Dans la plupart des cas, ce rendement sera insuffisant pour obtenir le niveau de rejet requis en phosphore et il est alors nécessaire de compléter le traitement par voie biologique par un traitement physico-chimique impliquant une injection de sel métallique pour compléter la déphosphatation. Le principe de fonctionnement est alors celui illustré par le schéma de la figure 4b.

Ainsi qu'on le voit sur cette figure, le réactif de déphosphatation peut être injecté en plusieurs endroits du système biologique : dans le bassin anaérobie ; dans le bassin aérobie ; entre le bassin aérobie et le clarificateur.

A titre d'exemple, la quantité P(pré) devant être éliminée par précipitation pour respecter un niveau PT1 qui correspond à un rendement d'élimination de 80% serait, pour une quantité P(ent) = 100 kg/j de :
P(pré) = 100 - 55 - 20 = 25 kg/j.

La production de boues de déphosphatation correspondante serait de 178 kg/j, dans le cas de l'utilisation d'un sel de fer avec un rapport molaire Fe/P de 1,3 ; la quantité de sel de fer utilisée serait de 59 kg exprimée en fer.

Une comparaison des coûts entre ces deux techniques d'élimination du phosphore montre que les différences essentielles concernent les points suivants :
- les dispositions constructives de l'étage biologique dont la configuration en deux bassins pour la technique de déphosphatation biologique est plus onéreuse que la configuration en un seul bassin pour la déphosphatation physico-chimique ;
- la consommation de sel métallique qui sera plus élevée en déphosphatation physico-chimique qu'en déphosphatation biologique (plus 120% dans l'exemple considéré).
- la production de boues de déphosphatation qui sera plus élevée en déphosphatation physico-chimique qu'en déphosphatation biologique (plus 80% dans l'exemple présenté).

Ces deux techniques de traitement ayant une efficacité reconnue équivalente, dans la mesure où les règles de l'art sont respectées, le choix de l'une ou de l'autre de ces techniques dépendra :
- des caractéristiques de l'effluent à traiter qui peuvent être plus ou moins favorables à la mise en oeuvre de la déphosphatation biologique et
- des conditions économiques locales et de leur impact sur le coût d'approvisionnement en sel métallique d'une part, et sur les coût d'élimination des boues d'autre part.

L'état antérieur de la technique fait également connaître des installations associant, dans une même filière le traitement de l'azote et du phosphore, ceci dans le cas où la quantité de l'eau traitée nécessite ces traitements simultanés. On associe alors dans cette même filière les techniques de traitement rappelées ci-dessus.

Les figures 5 à 8b illustrent les combinaisons de ces traitements pouvant être mis en oeuvre dans une filière unique d'élimination simultanée de l'azote et du phosphore.

Sur la figure 5, on a illustré une installation assurant un traitement de l'azote en deux bassins avec une déphosphatation physico-chimique.

Sur la figure 6, on a représenté une installation assurant un traitement de l'azote en deux bassins avec une déphosphatation biologique et une déphosphatation complémentaire par voie physico-chimique ;

Sur les figures 7a et 7b, on a représenté les deux phases de fonctionnement d'une installation de traitement de l'azote en un bassin unique avec déphosphatation physico-chimique et

Sur les figures 8a et 8b, on a représenté les deux phases de fonctionnement d'une installation de traitement de l'azote en un bassin unique avec déphosphatation biologique et déphosphatation complémentaire par voie physico-chimique.

Partant de cet état de la technique, la présente invention se propose d'apporter un procédé d'épuration d'eaux résiduaires assurant simultanément l'élimination de l'azote et du phosphore, ce procédé étant mis en oeuvre dans des installations ou stations d'épuration faisant l'objet d'importantes variations périodiques de charges polluantes à traiter, telles que décrites précédemment, le problème technique résolu par l'invention étant celui de faire évoluer dans les même ouvrages les techniques de traitement de l'azote et du phosphore, en fonction des situations de charges polluantes reçues par l'installation d'épuration. Il est ainsi possible de bénéficier des avantages économiques de chaque technique de traitement et d'optimiser les coûts d'investissement et de fonctionnement.

En conséquence, cette invention concerne un procédé d'épuration d'eaux résiduaires en vue du traitement de l'azote et du phosphore contenus dans ces effluents, ce procédé étant mis en oeuvre dans une installation comprenant un bassin anaérobie, un second bassin muni de moyens d'aération pouvant être mis en service pour le faire fonctionner en mode aérobie, ou hors service pour un fonctionnement en mode anoxique, un clarificateur et des moyens d'injection de sels métalliques dans le second bassin, ce procédé étant en outre caractérisé en ce qu'il comporte les étapes suivantes :
a) dimensionner les bassins et les moyens d'aération sur la base de la charge de pollution la plus faible, dite basse charge, qui correspond à la charge de l'installation par temps sec ;
b) faire fonctionner l'installation en période de temps sec, ou à faible charge, selon le mode traitement de l'azote en un bassin avec déphosphatation biologique ;
c) faire fonctionner l'installation en période de temps de pluie, ou à haute charge, en mettant en oeuvre la technique de traitement physico-chimique du phosphore et la technique de traitement de l'azote en deux bassins et
d) piloter l'installation en détectant la situation de charge dans laquelle elle se situe (haute charge ou basse charge) et pour adapter la configuration de fonctionnement des bassins à la situation de charge constatée.

Selon l'invention, lors de l'étape b) ci-dessus, le premier bassin fonctionne en anaérobie afin d'assurer la déphosphatation biologique et le second bassin fonctionne alternativement en aérobie, pour assurer la nitrification, puis en anoxie, pour assurer la dénitrification, avec recirculation interne des boues par agitation.

Selon l'invention, lors de l'étape c) ci-dessus, le premier bassin est transformé en bassin d'anoxie afin d'assurer la dénitrification et le second bassin fonctionne en aérobie pour assurer la nitrification, la déphosphatation physico-chimique étant obtenue par apports de sels métalliques.

Selon la présente invention, le pilotage de l'installation est assuré à l'aide d'un système comprenant un automate programmable, un analyseur de nitrates, des sondes de mesure du potentiel redox et d'une sonde de mesure d'oxygène dissous et il est caractérisé en ce que la régulation est effectuée à partir de la mesure en continu des nitrates résiduels :
- en période de basse charge, le premier bassin, fonctionnant en mode anaérobie pour assurer le traitement biologique du phosphore ;
- le changement de configuration étant effectué uniquement lorsque la charge d'azote l'exige (en période de haute charge) :
- on réalise la nitrification dans le deuxième bassin fonctionnant en mode aérobie, la dénitrification étant contrôlée par l'une des sondes de mesure de potentiel redox ;
- on contrôle la dénitrification par l'intermédiaire de l'analyseur en continu de nitrates dans le deuxième bassin ;
- le changement de configuration de fonctionnement du premier bassin de mode anaérobie en mode anoxique et inversement est piloté à partir de l'analyseur de nitrates.

D'autres caractéristiques et avantages de la présente invention ressortiront de la description faite ci-après en référence aux dessins annexés qui en illustrent des exemples de mise en oeuvre dépourvus de tout caractère limitatif. Sur les dessins :
- les figures 1 à 8b sont des schémas relatifs à l'état antérieur de la technique discuté ci-dessus ;

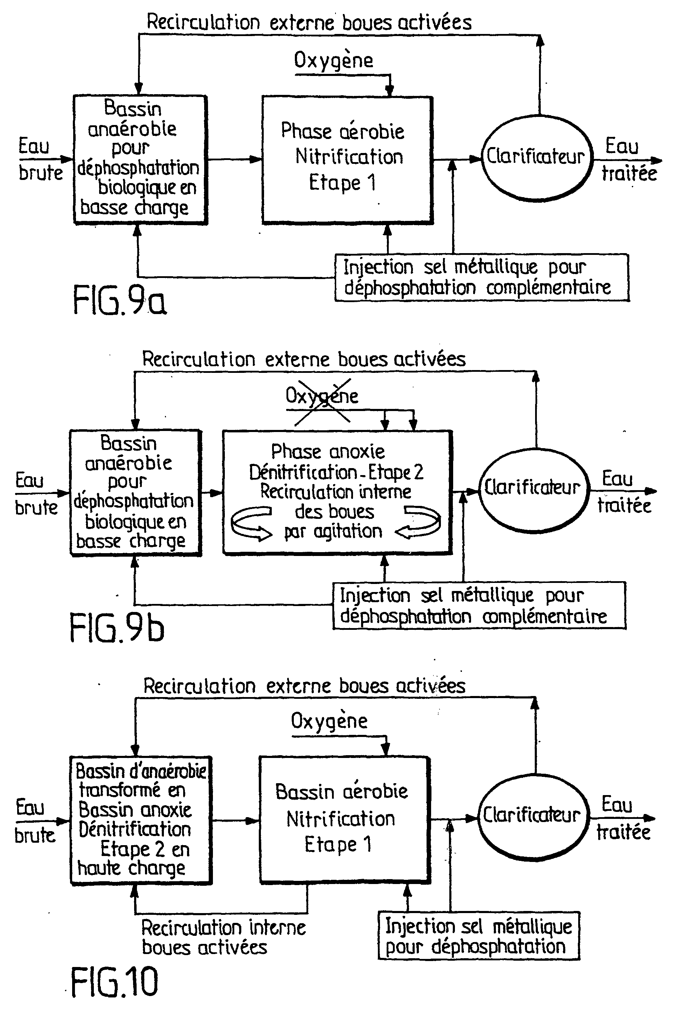

- les figures 9a et 9b sont des schémas illustrant le mode de fonctionnement d'une installation mettant en oeuvre l'invention en période de temps sec ou basse charge et
- la figure 10 est un schéma similaire aux figures 9a et 9b illustrant le mode de fonctionnement en période de temps de pluies ou haute charge.

Dans l'exemple de réalisation décrit ici, il s'agit d'une station d'épuration devant faire face à des variations importantes de charges polluantes à traiter entre la situation de temps sec (basse charge) et la situation de temps de pluies (haute charge), avec pour hypothèse :
charge de temps de pluies = 1,5 fois la charge de temps sec.

Ainsi qu'on l'a déjà mentionné ci-dessus, le procédé selon l'invention consiste à dimensionner l'installation, c'est-à-dire la station d'épuration, sur la base de la charge de pollution la plus faible (basse charge) tout en mettant en oeuvre la technique du traitement de l'azote en un bassin avec déphosphatation biologique, et à transformer la filière de traitement en période de haute charge de façon à traiter l'azote en deux bassins et à réaliser un traitement physico-chimique du phosphore.

### A) Fonctionnement en période de basse charge

On se réfère en premier lieu aux figures 9a et 9b qui illustrent le principe de ce fonctionnement en basse charge. Durant cette période de fonctionnement, le premier bassin fonctionne en mode anaérobie pour assurer la déphosphatation biologique et le second bassin fonctionne alternativement en mode aérobie (pour assurer la nitrification) et en mode anoxique (pour assurer la dénitrification) avec une recirculation interne des boues. Il est également prévu une déphosphatation complémentaire par injection de sels métalliques comme précédemment expliqué.

Les avantages de cette configuration sont les suivants :
- investissement optimisé pour les ouvrages de traitement de l'azote (plus faible qu'avec la technique à deux bassins) ;
- dimensionnement de la puissance horaire d'aération sur la base de 1/12 des besoins journaliers « basse charge », donc plus élevée qu'avec la technique à deux bassins (1/20 des besoins journaliers) ;
- optimisation de la consommation de sels métalliques (soit moins de 50% de la quantité nécessaire en mettant en oeuvre la technique de déphosphatation physico-chimique) et
- minimisation de la production de boues de déphosphatation (soit 50 à 60% de la quantité produite avec la technique de déphosphatation physico-chimique).

Ainsi, cette configuration de fonctionnement permet d'optimiser les coûts d'investissement de départ des ouvrages de la station d'épuration et de minimiser les coûts de fonctionnement relatifs à la déphosphatation pendant toute la période de basse charge.

### B) Fonctionnement en période de haute charge

En situation de haute charge, les techniques de traitement de l'azote et du phosphore utilisées changent, ce qui est possible en modifiant la fonction de plusieurs ouvrages dans la filière de traitement.

On a en effet observé qu'en période de haute charge, l'efficacité du bassin d'anaérobiose (premier bassin) pour effectuer le traitement biologique du phosphore diminue de façon importante car les conditions requises ne sont plus réunies et notamment :
- le temps de séjour devient insuffisant en raison de l'augmentation de débit qui accompagne l'augmentation de la charge polluante et
- les conditions d'anaérobiose vraies ne sont plus totalement présentes en raison d'un apport d'oxygène avec les eaux de pluies.

L'élimination biologique par sur-assimilation du phosphore n'ayant plus la même efficacité, le rendement d'élimination global est obtenu par une augmentation des quantités de sels métalliques injectées. On transforme ainsi la filière de traitement dans la configuration de la technique de traitement physico-chimique du phosphore.

Le bassin d'anaérobiose (premier bassin) n'étant plus utile pour le traitement biologique du phosphore, il peut être alors utilisé en bassin d'anoxie par démarrage de la recirculation interne des boues activées, ce qui lui permet de mettre en oeuvre la technique du traitement de l'azote en deux bassins (bassin anaérobie : dénitrification et bassin aérobie : nitrification). Ce changement de technique permet de traiter la charge de pollution supplémentaire (par exemple charge de temps de pluies = 1,5 fois la charge de temps sec) sans changer le dimensionnement des équipements d'aération.

En effet, dans le traitement de l'azote selon la technique en un bassin unique, la puissance horaire d'aération est de 1/12 des besoins journaliers basse charge. Dans la technique de traitement de l'azote en deux bassins, la puissance horaire d'aération est de 1/20 des besoins journaliers haute charge. Le rapport entre 1/20 et 1/12 correspond à une augmentation de puissance de 66%, ce qui, dans le cas de l'exemple choisi, permet de faire face à une augmentation de charge polluante à traiter qui est de 50%.

Le principe de fonctionnement en période de haute charge mis en oeuvre selon l'invention est illustré par la figure 10 :
- le bassin anaérobie est transformé en bassin d'anoxie pour le traitement de l'azote et
- on augmente la quantité de sels métalliques injectée pour le traitement du phosphore par voie physico-chimique, afin de compenser la baisse de la sur-assimilation biologique du phosphore.
   Les caractéristiques de cette configuration sont les suivantes :

- pas de sur-investissement pour traiter l'azote en deux bassins étant donné que l'on utilise le bassin anaérobie existant en en changeant simplement la fonction ;
- pas de sur-consommation de la quantité de sels métalliques utilisée pour le traitement du phosphore, par rapport à une solution de traitement biologique, étant donné que la variation de charge aurait de toute façon diminué l'efficacité de la sur-assimilation et nécessité de ce fait un complément de sels métalliques pour compenser ;
- pas de sur-productions de boues de déphosphatation par rapport à une solution de traitement biologique ;
- optimisation du dimensionnement de la capacité d'aération étant donné qu'un simple changement de configuration permet de traiter 50% de charge d'azote supplémentaire sans pour autant augmenter la capacité d'aération.

Le procédé prévoit en outre un pilotage automatique permettant d'une part de détecter la situation de charge (haute ou basse) dans laquelle se trouve l'installation d'épuration, et d'autre part d'adapter la configuration de fonctionnement de l'installation à la situation de charge détectée comme décrit ci-dessus.

Le système de pilotage pouvant être utilisé pour la mise en oeuvre du procédé de l'invention comporte un automate programmable industriel, un analyseur de nitrates, deux sondes de mesure du potentiel redox et une sonde de mesure d'oxygène dissous. Son principe de fonctionnement est le suivant :
1°) en période de basse charge (figures 9a et 9b), le premier bassin ou bassin d'anaérobiose assure le traitement biologique du phosphore, avec absence de recirculation des boues activées et le second bassin fonctionne alternativement en phase aérobie (avec apport d'oxygène : figure 9a) et en phase d'anoxie (figure 9b) par suppression de l'apport d'oxygène et recirculation interne des boues par agitation, de façon à assurer une dénitrification poussée.
2°) en période de haute charge correspondant à une augmentation de la pollution azotée, on privilégie en permanence la nitrification poussée dans le bassin aérobie (figure 10), celle-ci étant contrôlée par une sonde de mesure du potentiel redox. Les performances de dénitrification sont en permanence évaluées par l'analyseur en continu des nitrates dans le second bassin.

Le changement de configuration du fonctionnement du bassin anaérobie en bassin d'anoxie, et inversement, est piloté à partir de l'analyseur de nitrates selon le principe suivant :
- une consigne « seuil haut » en nitrates résiduels indiquant la nécessité d'une dénitrification complémentaire enclenche la recirculation interne des boues activées transformant ainsi le bassin anaérobie en bassin d'anoxie ;
- une consigne « seuil bas » en nitrates résiduels, indiquant que la dénitrification dans le bassin aérobie est complète, arrête la recirculation interne des boues activées ramenant ainsi le bassin d'anoxie en configuration d'anaérobie. Ce changement de mode de fonctionnement peut être confirmé par une sonde de mesure de potentiel redox indiquant que le bassin d'anoxie est revenu en configuration d'anaérobie.
   On a indiqué ci-après, à titre d'exemples, des valeurs de seuils de régulation des analyseurs.
- Sonde Redox dans le bassin aérobie pour contrôle des conditions de nitrification :
   - Seuil haut : 380 à 550 mV/EHN
   - Seuil bas : 100 à 300 mV/EHN
- Analyseur en continu des nitrates :
   - Seuil haut : 2 à 10 mg/l
   - Seuil bas : 0 à 2 mg/l
- Sonde Redox dans le premier bassin permettant de contrôler qu'il est revenu en configuration d'anaérobie :
- Ce retour se produit pour des valeurs de potentiel Redox inférieures à 0 à -200 mV/EHN
- Sonde oxygène dans le bassin aérobie : fonctionne en secours de la sonde Redox :
- Seuil haut : 1 à 6 mg/l
- Seuil bas : 0 à 1 mg/l + temporisation assurant une durée minimale à 0 mg/l (anoxie).

Selon un exemple de mise en oeuvre de la présente invention, le changement de configuration sur la consigne « seuil bas » en nitrates sera autorisée après au moins deux cycles de nitrification-dénitrification avec teneurs résiduelles en nitrates inférieures à la valeur de consigne.

Selon l'invention, le traitement complémentaire du phosphore par voie physico-chimique est effectué par une adaptation automatique pré-programmée du dosage de chlorure métallique selon le mode de fonctionnement de l'étage biologique.

Le procédé objet de l'invention apporte notamment les avantages suivants :
- il permet de dimensionner l'installation sur les bases de la situation de basse charge en azote, avec la configuration la plus économique (traitement de l'azote en un bassin avec déphosphatation biologique). En effet, on a vu ci-dessus qu'une telle configuration de fonctionnement permettait à la fois d'optimiser le coût d'investissement des ouvrages de l'installation et de minimiser les coûts de fonctionnement relatifs à la déphosphatation pendant toute la période de basse charge ;
- il permet de traiter une charge supplémentaire d'azote (plus 50% dans l'exemple choisi ici) grâce uniquement au changement de la configuration de fonctionnement, ceci sans qu'il soit nécessaire de prévoir un sur-dimensionnement des moyens d'aération dans la conception de la station d'épuration. En effet, si l'on avait dimensionné l'installation sur les bases de la situation de haute charge en azote, avec la configuration « traitement de l'azote en un bassin avec déphosphataticn biologique », afin de bénéficier des avantages de cette solution (en période de haute charge), notamment pour les coûts de fonctionnement, il aurait fallu dimensionner la puissance des moyens d'aération sur la base de 1/12 de la haute charge (au lieu de 1/12 de la basse charge dans le procédé de l'invention), ce qui représenterait un sur-investissement non utilisé pendant toute la période durant laquelle la station d'épuration est en basse charge et
- le fait de baser la régulation de l'installation sur une mesure de nitrates résiduels en continu permet de garantir que le changement de configuration de fonctionnement en période de haute charge est effectué uniquement si la charge d'azote reçue l'exige. De ce fait, la station d'épuration peut rester en configuration basse charge, lors d'un fonctionnement standard, ce qui permet d'optimiser en permanence les coûts d'exploitation.

Il demeure bien entendu que la présente invention n'est pas limitée aux exemples de mise en oeuvre décrits ou représentés ici, mais qu'elle en englobe toutes les variantes.

## Revendications

1. Procédé d'épuration d'eaux résiduaires en vue du traitement de l'azote et du phosphore contenus dans ces effluents, ce procédé étant mis en oeuvre dans une installation comprenant un bassin anaérobie, un second bassin muni de moyens d'aération pouvant être mis en service pour le faire fonctionner en mode aérobie, ou hors service pour un fonctionnement en mode anoxique, un clarificateur et des moyens d'injection de sels métalliques dans le second bassin, ce procédé étant en outre **caractérisé en ce qu'**il comporte les étapes suivantes :
a) dimensionner les bassins et les moyens d'aération sur la base de la charge de pollution la plus faible, dite basse charge, qui correspond à la charge de l'installation par temps sec ;
b) faire fonctionner l'installation en période de temps sec, ou à faible charge, selon le mode traitement de l'azote en un bassin avec déphosphatation biologique ;
c) faire fonctionner l'installation en période de temps de pluie, ou à haute charge, en mettant en oeuvre la technique de traitement physico-chimique du phosphore et la technique de traitement de l'azote en deux bassins et
d) piloter l'installation en détectant la situation de charge dans laquelle elle se situe (haute charge ou basse charge) et pour adapter la configuration de fonctionnement des bassins à la situation de charge constatée.

2. Procédé selon la revendication 1, **caractérisé en ce que**, lors de l'étape b), le premier bassin fonctionne en mode anaérobie afin d'assurer la déphosphatation biologique et le second bassin fonctionne alternativement en mode aérobie, pour assurer la nitrification, puis en mode anoxique, pour assurer la dénitrification, avec recirculation interne des boues par agitation.

3. Procédé selon la revendication 1, **caractérisé en ce que**, lors de l'étape c), le premier bassin est transformé en bassin d'anoxie afin d'assurer la dénitrification et le second bassin fonctionne en mode aérobie pour assurer la nitrification, la déphosphatation physico-chimique étant obtenue par apports de sels métalliques.

4. Procédé selon la revendication 1, **caractérisé en ce que** le pilotage de l'installation est assuré à l'aide d'un système comprenant un automate programmable, un analyseur de nitrates, des sondes de mesure du potentiel redox et d'une sonde de mesure d'oxygène dissous et il est **caractérisé en ce que** la régulation est effectuée à partir de la mesure en continu des nitrates résiduels :
- en période de basse charge, le premier bassin, fonctionnant en mode anaérobie assurant le traitement biologique du phosphore ;
- le changement de configuration étant effectué uniquement lorsque la charge d'azote l'exige (en période de haute charge) :
- on réalise la nitrification dans le deuxième bassin fonctionnant en mode aérobie, la dénitrification étant contrôlée par l'une des sondes de mesure de potentiel redox ;
- on contrôle la dénitrification par l'intermédiaire de l'analyseur en continu de nitrates dans le deuxième bassin ;
- le changement de configuration de fonctionnement du premier bassin de mode anaérobie en mode anoxique et inversement est piloté à partir de l'analyse en continu de la teneur en nitrates résiduels dans le bassin d'aération.

5. Procédé selon la revendication 4, **caractérisé en ce que** le pilotage du changement de configuration à partir de l'analyse en continu des nitrates dans le bassin d'aération résiduels s'effectue à l'aide de deux consignes :
- une consigne « seuil haut » en nitrates résiduels indiquant la nécessité d'une dénitrification complémentaire enclenche la recirculation interne des boues activées transformant ainsi le bassin anaérobie en bassin d'anoxie ;
- une consigne « seuil bas » en nitrates résiduels, indiquant que la dénitrification dans le bassin aérobie est complète, arrête la recirculation interne des boues activées ramenant ainsi le bassin d'anoxie en configuration anaérobie.

6. Procédé selon la revendication 5, **caractérisé en ce que** le changement de mode de fonctionnement peut être confirmé par une sonde de mesure de potentiel redox indiquant que le bassin d'anoxie est revenu en configuration anaérobie.

7. Procédé selon la revendication 5, **caractérisé en ce que** le changement de configuration sur la consigne « seuil bas » en nitrates est autorisée après au moins deux cycles de nitrification-dénitrification avec teneurs résiduelles en nitrates inférieures à la valeur de consigne.

8. Procédé selon l'une quelconque des revendications précédentes, **caractérisé en ce que** l'on un traitement complémentaire du phosphore par voie physico-chimique par une adaptation automatique pré-programmée du dosage de chlorure métallique selon le mode de fonctionnement de l'étage biologique.

## Patentansprüche

1. Verfahren zum Reinigen von Abwässern mit Behandlung von in diesen Abwässern enthaltenen Stickstoff und Phosphor, wobei dieses Verfahren in einer Anlage durchgeführt wird, die ein anaerobes Becken umfasst, ein zweites Becken, das mit Mitteln zum Belüften ausgestattet ist, die in Betrieb gesetzt werden können, um das Becken in aerobem Betrieb arbeiten zu lassen, oder außer Betrieb für einen Sauerstoff-Mangel-Betrieb, eine Klärstufe und Mittel zum Zuführen von metallischen Salzen in das zweite Becken, wobei dieses Verfahren außerdem **dadurch gekennzeichnet ist, dass** es die folgenden Schritte umfasst:
a) die Becken und die Mittel zum Belüften auf der Basis der geringsten Verschmutzungs-Belastung zu dimensionieren, Niedriglast genannt, die der Belastung der Anlage bei trockenem Wetter entspricht;
b) die Anlage in Trockenwetter-Perioden oder bei Niedriglast in der Betriebsart der Stickstoffbehandlung in einem Becken mit biologischem Phosphor-Abbau arbeiten zu lassen;
c) die Anlage in Regenwetter-Perioden oder bei hoher Last unter Anwendung der Technik der physikalisch-chemischen Behandlung des Phosphors und der Technik der Behandlung des Stickstoffs in zwei Becken arbeiten zu lassen;
d) die Anlage zu regeln, indem die Lastsituation, in der sie sich befindet (hohe Last oder Niedriglast), erfasst wird, und die Konfiguration der Arbeitsweise der Becken an die festgestellte Last-Situation anzupassen.

2. Verfahren nach Anspruch 1, **dadurch gekennzeichnet, dass** bei dem Schritt b) das erste Becken in anaerobem Betrieb arbeitet, um den biologischen Phosphor-Abbau sicherzustellen, und dass das zweite Becken alternierend im aeroben Betrieb arbeitet, um die Nitrifikation sicherzustellen, und dann im Sauerstoff-Mangel-Betrieb, um den Stickstoff-Abbau sicherzustellen, mit interner Rückführung der Schlämme durch Rühren.

3. Verfahren nach Anspruch 1, **dadurch gekennzeichnet, dass** beim Schritt c) das erste Becken in ein Sauerstoff-Mangel-Becken umgewandelt wird, um den Stickstoff-Abbau sicherzustellen, und dass das zweite Becken im aeroben Betrieb arbeitet, um die Nitrifikation sicherzustellen, wobei der physikalischchemische Phosphor-Abbau durch Zuführen von metallischen Salzen erreicht wird.

4. Verfahren nach Anspruch 1, **dadurch gekennzeichnet, dass** die Steuerung der Anlage mithilfe eines Systems durchgeführt wird, das einen programmierbaren Rechner, einen Nitrat-Analysator, Sonden zum Messen des Redoxpotenzials und eine Sonde zum Messen des gelösten Sauerstoffs umfasst, und **dadurch gekennzeichnet, dass** die Regelung ausgehend von der kontinuierlichen Messung der Rest-Nitrate durchgeführt wird:
- wobei in Niedriglast-Perioden das erste, im anaeroben Betrieb arbeitende Becken die biologische Behandlung des Phosphors sicherstellt;
- wobei der Wechsel der Konfiguration ausschließlich durchgeführt wird, wenn die Belastung mit Stickstoff es erfordert (bei Perioden hoher Last):
- man führt die Nitrifikation in dem zweiten, im aeroben Betrieb arbeitenden Becken durch, wobei der Stickstoff-Abbau durch eine der Sonden zum Messen des Redoxpotenzials überwacht wird;
- man überwacht den Stickstoff-Abbau mittels des kontinuierlich arbeitenden Nitrat-Analysators in dem zweiten Becken;
- der Wechsel der Konfiguration der Arbeitsweise des ersten Beckens aus dem anaeroben Betrieb in den Sauerstoff-Mangel-Betrieb und umgekehrt wird ausgehend von der kontinuierlichen Analyse des Gehalts an Rest-Nitraten in dem Belüftungsbecken gesteuert.

5. Verfahren nach Anspruch 4, **dadurch gekennzeichnet, dass** die Steuerung des Wechsels der Konfiguration ausgehend von der kontinuierlichen Analyse der Restnitrate in dem Belüftungsbecken mithilfe zweier Sollgrößen durchgeführt wird:
- eine Sollgröße "obere Schwelle" an Restnitraten, die die Notwendigkeit eines ergänzenden Stickstoff-Abbaus anzeigt, löst die interne Rückführung der Belebtschlämme aus, und überführt so das Anaerob-Becken in ein Sauerstoff-Mangel-Becken;
- eine Sollgröße "untere Schwelle" an Restnitraten, die anzeigt, dass der Stickstoff-Abbau im anaeroben Becken vollständig ist, hält die interne Rückführung der Belebtschlämme an, und führt so das Sauerstoff-Mangel-Becken in die Anaerob-Konfiguration zurück.

6. Verfahren nach Anspruch 5, **dadurch gekennzeichnet, dass** der Wechsel der Arbeitsweise durch eine Sonde zum Messen des Redoxpotenzials bestätigt werden kann, die anzeigt, dass das Sauerstoff-Mangel-Becken in die anaerobe Konfiguration zurückgekehrt ist.

7. Verfahren nach Anspruch 5, **dadurch gekennzeichnet, dass** der Wechsel der Konfiguration auf die Sollgröße "untere Schwelle" nach mindestens zwei Zyklen von Nitrifikation/ Stickstoffabbau mit Restgehalten an Stickstoffen erlaubt wird, die geringer sind als der Wert der Sollgröße.

8. Verfahren nach einem der vorstehenden Ansprüche, **dadurch gekennzeichnet, dass** man eine ergänzende Behandlung des Phosphors auf physikalisch-chemischem Wege durch eine automatische vorprogrammierte Anpassung der Dosierung der Metallchlorid-Dosierung je nach dem Betriebsmodus der biologischen Stufe durchführt.

## Claims

1. Method for the purification of effluent with a view to treatment of the nitrogen and phosphorus contained in this effluent, this method being implemented in an installation comprising an anaerobic tank, a second tank provided with aeration means able to be brought into service in order to make it function in aerobic mode, or out of service for functioning in anoxic mode, a clarifier and means of injecting metallic salts into the second tank, this method also being **characterised in that** it comprises the following steps:
a) sizing the tanks and the aeration means on the basis of the lowest pollution load, referred to as the low load, which corresponds to the load on the installation in dry weather;
b) making the installation function in a period of dry weather, or at low load, according to the method of treating nitrogen in a tank with biological dephosphatisation;
c) making the installation function in a period of rainy weather, or at high load, by implementing the technique of physicochemical treatment of phosphorus and the technique of treatment of nitrogen in two tanks, and
d) controlling the installation by detecting the load situation in which it is situated (high load or low load) and in order to adapt the operating configuration of the tanks to the load situation found.

2. Method according to Claim 1, **characterised in that**, during step b), the first tank functions in anaerobic mode in order to provide biological dephosphatisation and the second tank functions in alternation in aerobic mode in order to provide nitrification and then in anoxic mode in order to provide denitrification, with internal recirculation of the sludge by agitation.

3. Method according to Claim 1, **characterised in that**, during step c), the first tank is converted into an anoxia tank in order to provide denitrification and the second tank functions in aerobic mode in order to provide nitrification, physicochemical dephosphatisation being obtained by the addition of metallic salts.

4. Method according to Claim 1, **characterised in that** the control of the installation is provided by means of a system comprising a programmable automatic controller, a nitrite analyser, sensors for measuring the redox potential and a sensor for measuring dissolved oxygen, and is **characterised in that** the regulation is effected from the continuous measurement of residual nitrates:
- in a period of low load, the first tank, functioning in anaerobic mode, providing the biological treatment of the phosphorus;
- the changing configuration being effected solely when the nitrogen load so requires (in a period of high load);
- nitrification is carried out in the second tank functioning in anaerobic mode, the denitrification being controlled by one of the redox potential measurement sensors;
- denitrification is controlled by means of the continuous nitrate analyser in the second tank;
- the change in operating configuration of the first basin from anaerobic mode to anoxic mode and vice versa is controlled from the continuous analysis of the residual nitrate content in the aeration tank.

5. Method according to Claim 4, **characterised in that** the control of the change in configuration from the continuous analysis of the residual nitrates in the aeration tank is effected by means of two set values:
- a "high threshold" set value for residual nitrates, indicating the need for supplementary denitrification, triggers the internal recirculation of the activated sludge, thus converting the anaerobic tank into an anoxia tank;
- a "low threshold" set value for residual nitrates, indicating that the denitrification in the aerobic tank is complete, stops the internal recirculation of the activated sludge, thus returning the anoxia tank to the anaerobic configuration.

6. Method according to Claim 5, **characterised in that** the change in operating mode can be confirmed by a redox potential measurement sensor indicating that the anoxia tank has returned to anaerobic configuration.

7. Method according to Claim 5, **characterised in that** the change in configuration on the "low threshold" nitrate set value is enabled after at least two nitrification-denitrification cycles with residual nitrate contents less than the set value.

8. Method according to any one of the preceding claims, **characterised in that** a supplementary treatment of the phosphorus is carried out by physicochemical method by a pre-programmed automatic adaptation of the apportionment of metallic chloride according to the operating mode of the biological stage.
